# EUROPEAN PATENT APPLICATION

(11) **EP 4 485 130 A1**
(43) Date of publication of application: **01.01.2025**
(21) Application number: 23759312.4
(22) Date of filing: 27.02.2023
(51) Int. Cl.: G06F 1/18

(54) **CONNECTOR-BASED PORT MANAGEMENT METHOD AND RELATED DEVICE**

(30) Priority: 28.02.2022 CN 202210188357
(71) Applicant: Huawei Technologies Co., Ltd., Shenzhen, Guangdong 518129 (CN)
(72) Inventor: JU, Haiqiang, Shenzhen, Guangdong 518129 (CN); NIU, Yuanjun, Shenzhen, Guangdong 518129 (CN); HU, Renjie, Shenzhen, Guangdong 518129 (CN)
(74) Representative: Körber, Martin Hans
(86) International application number: PCT/CN2023/078362
(87) International publication number: WO 2023/160691

(57) **Abstract**

A connector-based port management method includes: identifying connection of a unit; obtaining a unit requirement through a transmission interface provided by a connector, where the unit requirement indicates an attribute of a port required by the unit; and adapting, based on the unit requirement, a port mode of the port connected to the connector to the unit. This eliminates a disadvantage that a port signal definition of one connector cannot be adaptively and flexibly configured, but is applicable only to one type of high-speed signal and supports one type of unit, thereby effectively improving port flexibility, enabling one port to support more units, and improving configuration flexibility of the full kit.

## Description

This application claims priority to Chinese Patent Application No. 202210188357.1, filed with the China National Intellectual Property Administration on February 28, 2022 and entitled "CONNECTOR-BASED PORT MANAGEMENT METHOD AND RELATED DEVICE", which is incorporated herein by reference in its entirety.

### TECHNICAL FIELD

This application relates to the field of computer technologies, and in particular, to a connector-based port management method, a basic computing unit, a mainboard, and a computing device.

### BACKGROUND

Since the 1980s, Microsoft and Intel have formed the Wintel alliance to promote development of the personal computer (personal computer, PC) industry. The two companies are working closely within the PC industry to drive faster growth in the computing industry and gradually affect other computing devices such as servers. The computing device such as the server has various application scenarios and configuration types, and has a relatively high requirement on reliability. In addition, the computing device such as the server has a huge commercial volume and is the focus of open industry ecosystem construction.

A conventional server mainboard has a high technical threshold for development. In addition to a central processing unit (central processing unit, CPU), functions such as bus fan-out, power fan-out, and maintenance and management are further included. These CPU-related circuits on the mainboard are all from reference designs provided by CPU vendors, but different CPU vendors provide different reference designs, which requires a lot of resources and time for mainboard development and design. To meet requirements for fast upgrade of computing products such as servers, full kit vendors need to invest a lot of energy in differentiated innovation, but they can only focus on low-level hardware specification competition. This cannot meet customers' requirements for various scenarios and computing power, and forces the full kit vendors to fall into inefficient homogeneous competition and involution. With the trend of diversified computing power, more processor vendors emerge, and launch more processor products with different architectures, in which functions of various processors are increasingly enhanced. For example, ports of some processors may be flexibly configured with a plurality of protocols. Specifically, the ports of the processors may support protocol types such as the peripheral component interconnect express (peripheral component interconnect express, PCIe), the serial attached small computer system interface (Serial Attached Small Computer System Interface, SAS), the serial advanced technology attachment (Serial Advanced Technology Attachment, SATA), or the Ethernet (Ethernet, ETH).

To meet a requirement for an application scenario, a configuration type, or reliability of the computing device such as the server, a mainboard of the computing device such as the server may be further connected to a unit. The mainboard and the unit may be interconnected by using a connector and a cable. For example, when the unit is a high-speed unit, high-speed interconnection may be implemented between the mainboard and the high-speed unit by using a high-speed connector and a high-speed cable.

However, a definition of a port on a connector in the mainboard is usually fixed. Therefore, the mainboard is usually configured to connect to a same type of unit, for example, a type of unit that supports PCIe. This limits an application scenario of the mainboard, and is not conducive to flexible and differentiated configuration of the full kit.

### SUMMARY

This application provides a connector-based port management method. In the method, a transmission interface provided by a connector is used to obtain a requirement, and a port mode of a port connected to the connector is adapted to a unit based on a unit requirement, to eliminate a disadvantage that an interface signal definition of one connector cannot be adaptively and flexibly configured, but is applicable only to one type of high-speed signal and supports one type of unit, thereby effectively improving port flexibility, enabling a same port to support more units, and improving configuration flexibility of the full kit. This application further provides a basic computing unit, a unit, a mainboard, a computing device, a computer-readable storage medium, and a computer program product that correspond to the foregoing method.

According to a first aspect, an embodiment of this application provides a connector-based port management method. The method is provided based on a new server architecture. The new server architecture refers to a peer-to-peer interconnection architecture. In this architecture, a conventional mainboard is split into a basic computing unit and an extension unit, and specifications and forms of mainboards required in different scenarios are supported in a manner in which the basic computing unit cooperates with the extension unit. In the new server architecture, the basic computing unit is communicatively connected to a unit by using PCIe, a memory interconnection, or a unified bus, and is connected to the extension unit by using a management interface. The unit is a general term for a type of component or device. For example, the unit may include units with different functions, such as a storage unit, an input/output unit, an acceleration unit, a memory expansion unit, a heat dissipation unit, a computing unit, and a management unit.

The method may be performed by the basic computing unit. Specifically, the basic computing unit identifies connection of the unit, and obtains a unit requirement through a transmission interface provided by a connector, where the unit requirement indicates an attribute of a port required by the unit. Then, the basic computing unit may adapt, based on the unit requirement, a port mode of the port connected to the connector to the unit.

In the method, the basic computing unit obtains the unit requirement through the transmission interface provided by the connector, and adapts, based on the unit requirement, the port mode of the port connected to the connector to the unit, to eliminate a disadvantage that a port signal definition of a same connector cannot be adaptively and flexibly configured, and is applicable to only one high-speed signal type and supports a same type of unit, thereby effectively improving port flexibility, enabling a same port to support more units, and improving competitiveness of the basic computing unit and configuration flexibility of the full kit.

In some possible implementations, before obtaining the unit requirement through the transmission interface provided by the connector, the basic computing unit may further obtain a unit type of the unit, and then configure, based on the unit type, a sideband signal corresponding to the unit. The sideband signal includes the transmission interface.

In the method, the basic computing unit identifies the unit type, adaptively configures the sideband signal based on the unit type, and further transmits the unit requirement based on the transmission interface in the sideband signal, to implement port adaptation based on the unit requirement. In this way, the basic computing unit can support different units based on a same connector.

In some possible implementations, the unit requirement includes one or more of a port type, a link bit width, a maximum port rate, a lane sequence reversal capability, a signal polarity reversal capability, and a hot swap capability. In the method, adaptive configuration of the port type, lane sequence inversion, polarity inversion, and hot swap is implemented by using the unit requirement transmitted by the unit.

In some possible implementations, a first pin is provided on the connector, and is configured to transmit the unit type. The first pin may be several pins in pins for transmitting the sideband signal, for example, may be three fixed pins in the pins for transmitting the sideband signal. Correspondingly, the basic computing unit may sample the first pin of the connector to obtain the unit type of the unit. The basic computing unit includes a controller, and the controller has a unit type identification circuit. The basic computing unit may sample the first pin of the connector by using the controller, and then identify a signal of the first pin by using the unit type identification circuit in the controller, to obtain the unit type of the unit.

In some possible implementations, the unit type is identified by using a high or low level of the first pin. Specifically, the unit type may be represented by using a unit type identifier, and the unit type identifier may be identified by using the high or low level of the first pin. In this way, the basic computing unit can quickly identify the unit type of the unit based on the first pin, further configure the sideband signal based on the unit type, and quickly configure the port mode of the port based on the unit requirement transmitted through the transmission interface in the sideband signal, thereby improving adaptation efficiency.

In some possible implementations, a second pin is provided on the connector, and is configured to transmit the unit requirement. The second pin may be several pins in the pins for transmitting the sideband signal, for example, may be several fixed pins other than the first pin in the pins for transmitting the sideband signal. Correspondingly, the basic computing unit may sample the second pin of the connector, to obtain the unit requirement transmitted by the unit through the transmission interface.

In some possible implementations, the unit has a reporting function. The unit may actively report the unit requirement, and the basic computing unit may receive, through the transmission interface provided by the connector, the unit requirement reported by the unit, to implement port mode adaptation, thereby implementing extension of different types of units. In this way, one basic computing unit can flexibly support more configurations of the full kit, thereby improving a reuse degree of the basic computing unit and reduces development costs.

In some possible implementations, the basic computing unit may first send a request to the unit, and then the basic computing unit may receive, through the transmission interface provided by the connector, the unit requirement returned by the unit in response to the request. In this way, port adaptation can be implemented.

In some possible implementations, the transmission interface is a single-wire transmission interface. The single-wire transmission interface uses a single-wire transmission communication protocol. The protocol is specifically a private communication protocol, and a protocol layer may use a HiSport interface protocol. In the method, the unit requirement is transmitted by using the single-wire transmission communication protocol, so that pins can be saved, and more pins are reserved for another sideband signal.

In some possible implementations, the unit type is generated by a unit type identifier implementation circuit in the unit. The unit type identifier implementation circuit may generate a corresponding unit type identifier by controlling a pull-up resistor and a pull-down resistor, and further transmit the unit type identifier to the basic computing unit, so that the basic computing unit can adaptively configure the sideband signal based on the unit type identifier.

In some possible implementations, the method is performed by the basic computing unit. In this way, the basic computing unit can extend different types of units by using one connector, thereby meeting a service requirement and avoiding a limitation on an application scenario.

In some possible implementations, the unit includes one or more of a storage unit, an input/output I/O unit, an acceleration unit, and a memory expansion unit. In this way, the basic computing unit can extend a unit with a corresponding function based on a service requirement.

According to a second aspect, an embodiment of this application provides a connector-based port management method. The method is performed by a unit. The method includes:
connecting to a basic computing unit; and
providing a unit requirement for the basic computing unit through a transmission interface provided by a connector, so that the basic computing unit adapts a port mode of a port to a unit based on the unit requirement.

In some possible implementations, before the providing a unit requirement for the basic computing unit, the method further includes:
providing a unit type for the basic computing unit by using the connector, so that the basic computing unit configures, based on the unit type, a sideband signal corresponding to the unit, where the sideband signal includes the transmission interface.

In some possible implementations, the providing a unit requirement for the basic computing unit through a transmission interface provided by a connector includes:
reporting the unit requirement to the basic computing unit through the transmission interface provided by the connector.

In some possible implementations, the providing a unit requirement for the basic computing unit through a transmission interface provided by a connector includes:
returning the unit requirement to the basic computing unit through the transmission interface in response to a request of the basic computing unit.

In some possible implementations, the unit requirement includes one or more of a port type, a link bit width, a maximum port rate, a lane sequence reversal capability, a signal polarity reversal capability, and a hot swap capability.

According to a third aspect, this application provides a basic computing unit. The basic computing unit includes a processor and a connector, the processor has a port, and the basic computing unit is configured to perform the method according to any one of the implementations of the first aspect of this application, to manage the port of the processor based on the connector.

In some possible implementations, the processor is a central processing unit, and a main processor and a coprocessor are packaged in the central processing unit. The coprocessor is configured to: obtain a unit requirement through a transmission interface provided by the connector, where the unit requirement indicates an attribute of a port required by a unit; and transfer the unit requirement to the main processor. The main processor is configured to adapt, based on the unit requirement, a port mode of the port connected to the connector to the unit.

In some possible implementations, the basic computing unit further includes a controller, and the controller is configured to: obtain a unit requirement through a transmission interface provided by the connector, where the unit requirement indicates an attribute of a port required by a unit; and transfer the unit requirement to the processor. The processor is configured to adapt a port mode of the port connected to the connector to the unit.

In some possible implementations, the controller includes one or more of a micro control unit MCU, a complex programmable logic device CPLD, and a field programmable gate array FPGA.

According to a fourth aspect, this application provides a unit. The unit includes a memory and a connector. The unit is configured to perform the method according to any one of the implementations of the second aspect of this application, to manage a port of a processor based on the connector.

According to a fifth aspect, this application provides a mainboard. The mainboard includes a basic computing unit and a unit. When the unit is connected to the basic computing unit, the basic computing unit is configured to perform the method according to any one of the implementations of the first aspect of this application, to manage a port of a processor on the basic computing unit based on a connector.

According to a sixth aspect, this application provides a computing device. The computing device includes a basic computing unit, and the basic computing unit is configured to perform the method according to any one of the implementations of the first aspect of this application, to manage a port of a processor on the basic computing unit based on a connector.

According to a seventh aspect, this application provides a computer-readable storage medium. The computer-readable storage medium stores instructions, and the instructions instruct a computing device to perform the method according to any one of the implementations of the first aspect or the second aspect.

According to an eighth aspect, this application provides a computer program product including instructions. When the computer program product runs on a computing device, the computing device is enabled to perform the method according to any one of the implementations of the first aspect or the second aspect.

In this application, based on the implementations provided in the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of a structure of a mainboard according to an embodiment of this application;
FIG. 2 is a diagram of a structure of a mainboard according to an embodiment of this application;
FIG. 3 is a flowchart of a connector-based port management method according to an embodiment of this application;
FIG. 4 is a diagram of stable connection detection according to an embodiment of this application; and
FIG. 5 is a diagram of a structure of a computing device according to an embodiment of this application.

### DESCRIPTION OF EMBODIMENTS

For ease of understanding, technical nouns in this application are first explained.

A new server architecture, which may also be briefly referred to as a new architecture, is a peer-to-peer interconnection architecture. In this architecture, a conventional mainboard is first split into a basic computing unit (Basic Computing Unit, BCU) and an extension unit (Extension Unit, EXU), and specifications and forms of mainboards required in different scenarios are supported in a manner in which the basic computing unit cooperates with the extension unit.

The basic computing unit includes a CPU, a double data rate (double data rate, DDR), and a related power supply, and provides a general computing capability and extended interfaces such as a peripheral storage interface, an input/output (input/output, I/O) interface, and an acceleration interface. The basic computing unit supports different series of CPUs, such as Kunpeng^{®}, Intel^{®}, and AMD^{®}. Optionally, the basic computing unit supports a heterogeneous processor, in other words, the basic computing unit may support different types of processors. For example, the basic computing unit supports any one of processors such as a CPU, an application-specific integrated circuit (application-specific integrated circuit, ASIC), a programmable logic device (programmable logic device, PLD), a complex programmable logic device (complex programmable logic device, CPLD), a field programmable gate array (field programmable gate array, FPGA), generic array logic (generic array logic, GAL), a system on chip (system on chip, SoC), a software-defined infrastructure (software-defined infrastructure, SDI) chip, and an artificial intelligence (artificial intelligence, AI) processor or any combination thereof.

The extension unit includes a mainboard management controller (Baseboard Management Controller, BMC) (also referred to as a baseboard management controller) chip, a management system, and a bridge chip (for example, a platform controller hub (Platform Controller Hub, PCH) of an Intel system), is a management extension of the basic computing unit, and provides device, security, energy efficiency, and reliability management functions as a management center of the full kit. The BMC may also be referred to as the baseboard management controller.

In the new architecture, the basic computing unit is communicatively connected to a unit by using PCIe, a compute express link (Compute Express Link, CXL), or a unified bus (unified bus, UB or Ubus), or the like, and is connected to the extension unit through a management interface. The management interface may transmit a management signal, a power sequence control signal, and an I/O extension interface signal. During specific implementation, a specific manner of connection between the basic computing unit and the unit and between the basic computing unit and the extension unit includes: a soft connection manner for implementing the foregoing connection by using a cable, or a hard connection manner for implementing the foregoing connection by using a connector.

Further, a unit is a general term for a type of component or device. Different units include a storage unit (Storage Unit, STU), an I/O unit (Input/Output Unit, I/OU), an acceleration unit (Acceleration Unit, ACU), a memory expansion unit (Memory Expansion Unit, MEU), a heat dissipation unit, a computing unit, a management unit, and the like in terms of function.

The storage unit includes a hard disk backplane and the like, is a system storage extension, and supports a plurality of media and forms such as a hard disk drive (hard disk drive, HDD)/solid-state drive (solid-state drive, SSD)/non-volatile memory express (Non-Volatile Memory express, NVMe)/storage class memory (Storage Class Memory, SCM).

The I/O unit includes units such as a riser, to extend a system I/O, and supports a PCIe standard card and an open compute project (Open Compute Project, OCP) card.

The acceleration unit includes an acceleration card of a standard card type, an intra-module acceleration unit, and the like, and provides system acceleration unit extension and interconnection functions.

The memory expansion unit includes a carrier board, a memory expansion chip, a dual in-line memory module (dual in-line memory module, DIMM), an SCM medium, and the like, and provides a function of expanding a memory bandwidth and a content capacity of a system.

The heat dissipation unit is configured to dissipate heat for a computing device or hardware in the computing device, and includes a combination of several heat dissipation manners such as air-cooled heat dissipation, liquid cooling heat dissipation, or a combination thereof. It should be understood that a quantity of heat dissipation units and structures and types of the heat dissipation units do not constitute a limitation on the technical solutions to be protected in this application.

The computing unit is a device that provides a general computing capability, such as a central processing unit (central processing unit, CPU) or a memory.

The management unit is a device that provides device management, such as the baseboard management controller.

Based on the new server architecture, this application provides a connector-adaptive port management solution. A unit requirement is obtained through a transmission interface provided by a connector. The unit requirement indicates an attribute of a port required by a unit (for ease of description, a high-speed unit is used as an example below for description). A port mode of the port connected to the connector is adapted to the high-speed unit (for example, the foregoing high-speed unit such as the storage unit, the I/O unit, the acceleration unit, or the memory expansion unit) based on the unit requirement, to eliminate a disadvantage that an interface signal definition of one connector cannot be adaptively and flexibly configured, but is applicable only to one type of high-speed signal and supports one type of high-speed unit, thereby effectively improving port flexibility, enabling one port to support more high-speed units, and improving competitiveness of the basic computing unit and configuration flexibility of the full kit.

To make the technical solutions of this application clearer and easier to understand, the following describes in detail the technical solutions provided in this application with reference to the accompanying drawings.

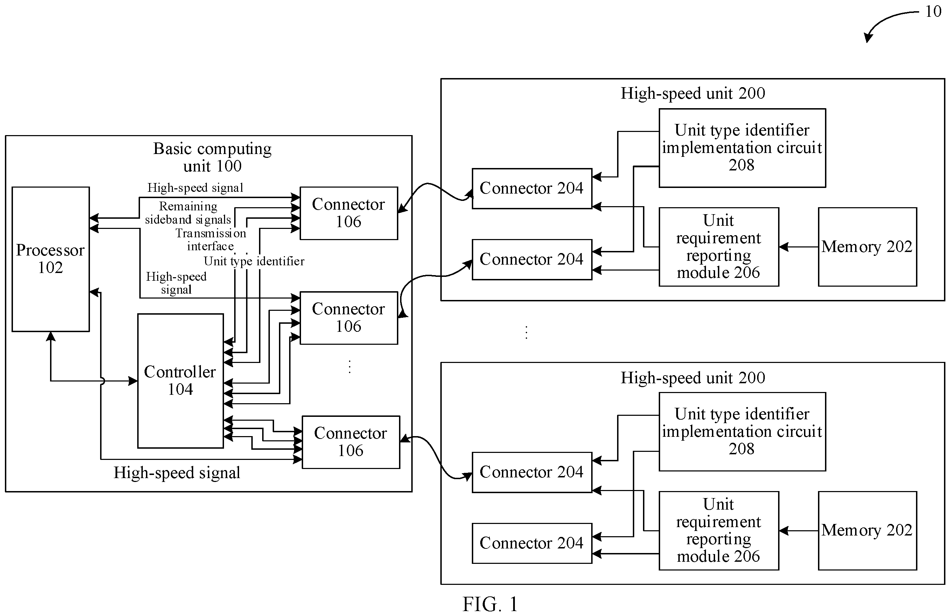

First, refer to a schematic diagram of a structure of a mainboard shown in FIG. 1. The mainboard 10 includes a basic computing unit 100 and a peripheral high-speed unit 200. The high-speed unit 200 is connected to the basic computing unit 100. For example, the high-speed unit 200 may be connected to the basic computing unit 100 in an insertion manner. The mainboard 10 further includes an extension unit (not shown in FIG. 1). The extension unit provides a management function and power supply for the basic computing unit 100 and the extended high-speed unit 200.

The basic computing unit 100 includes a processor 102, a controller 104, and a connector 106. The processor 102 may be a CPU. The controller 104 may be one or more of a micro controller unit (micro controller unit, MCU), a complex programmable logic device (complex programmable logic device, CPLD), and a field programmable logic gate array (Field Programmable Gate Array, FPGA). The connector 106 is configured to connect to the peripheral high-speed unit 200. In some embodiments, the connector 106 may be a high-speed connector, for example, a unified bus connector (Unified Bus Connector, UBC) or a unified bus connector-double density (Unified Bus Connector-Double Density, UBC-DD). The basic computing unit 100 may include one or more connectors 106, and a plurality of connectors 106 may be configured to connect to different types of high-speed units 200 (for example, a high-speed unit 200 supporting PCIe and a high-speed unit 200 supporting ETH).

The high-speed unit 200 includes a memory 202 and a connector 204. The memory 202 is configured to store a unit requirement of the high-speed unit. The unit requirement includes an attribute of a port required by the unit. In some embodiments, the attribute of the port includes one or more of a port type, a link (link) bit width, a maximum port rate, a lane sequence (lane) reversal capability, a signal polarity reversal capability, and a hot swap capability. The connector 204 is configured to connect to the basic computing unit 100. Specifically, the connector 204 is connected to the connector 106 on the basic computing unit 100, to connect to the basic computing unit 100.

The unit requirement stored in the memory 202 may be transmitted to the basic computing unit 100 through the connector 204, so that the basic computing unit 100 adapts, based on the unit requirement, a port mode of the port connected to the connector 106 to the high-speed unit 200. The port mode is a mode classified based on an attribute of the port. The attribute of the port varies based on the port mode.

It should be noted that the high-speed unit 200 may actively report the unit requirement, or may return the unit requirement to the basic computing unit 100 in response to a request (for example, a read request) of the basic computing unit 100. In some embodiments, the high-speed unit 200 may further include a unit requirement reporting module 206. The unit requirement reporting module 206 is separately connected to the memory 202 and the connector 204. The unit requirement reporting module 206 reads the unit requirement stored in the memory 202, and transmits the unit requirement to the basic computing unit 100 through a transmission interface provided by the connector 204.

The unit requirement reporting module 206 may be implemented by using an MCU, a CPLD, an FPGA, or the like. The MCU, the CPLD, or the FPGA may include a built-in memory, for example, an on-chip read-only memory (read-only memory, ROM). The unit requirement may alternatively be stored in the built-in memory. The unit requirement reporting module 206 may read the unit requirement from the built-in memory, and then report the unit requirement to the basic computing unit 100. In some embodiments, the unit requirement may alternatively be stored in an independent memory, for example, the memory 202. The unit requirement reporting module 206 may read the unit requirement from the independent memory, and then report the unit requirement to the basic computing unit 100. In some other embodiments, when obtaining the unit requirement in an active reading manner, the basic computing unit 100 may directly read the unit requirement from an independent memory, for example, the memory 204.

Further, the high-speed unit 200 may further include a unit type identifier implementation circuit 208. The unit type identifier implementation circuit 208 is configured to generate a unit type, where the unit type may be represented by a unit type identifier. In some embodiments, the unit type identifier may be 101, 110, 011, 010, or the like. Based on this, the unit type may be identified by using high or low levels of several pins (which may be referred to as first pins for ease of description) of the connector 204. The unit type identifier implementation circuit 208 may transmit the unit type (for example, the unit type identifier) to the basic computing unit 100 through the connector 204, so that the basic computing unit 100 configures, based on the unit type, a sideband (sideband) signal corresponding to the high-speed unit 200. The sideband signal includes a transmission interface, and the transmission interface is configured to transmit the unit requirement.

In this embodiment of this application, a port definition on the connector 106 is designed, so that the same connector 106 can adaptively configure a high-speed signal type and a sideband signal definition based on different types of connected high-speed units 200, thereby greatly improving flexibility and applicability of the connector 106.

For ease of understanding, the following uses a widely used 74-pin high-speed connector (for example, a 74-pin slimline high-speed connector) as an example to describe an interface pin map (pin map) of the connector 106.

The 74-pin high-speed connector has 74 pins, and specifically includes eight pairs of (that is, 16) pins for transmitting high-speed signals (for example, a high-speed port data receiving signal and a high-speed port data sending signal), 20 pins for transmitting sideband signals (usually low-speed sideband signals, which may also be briefly referred to as low-speed signals), and some pins for transmitting ground signals. This is specifically shown as follows.

**Table 1 Example of the interface pin map (pin map) of the 74-pin high-speed connector**

| **Description** | **Net** | **Pin number** | | **Net** | **Description** |
|---|---|---|---|---|---|
| Ground | GND | **A1** | **B1** | GND | GND |
| High-speed port data receiving signal | CPU_RX0+ | **A2** | **B2** | CPU_TX0+ | High-speed port data sending signal |
| High-speed port data receiving signal | CPU_RX0- | **A3** | **B3** | CPU_TX0- | High-speed port data sending signal |
| Ground | GND | **A4** | **B4** | GND | Ground |
| High-speed port data receiving signal | CPU_RX1+ | **A5** | **B5** | CPU_TX1+ | High-speed port data sending signal |
| High-speed port data receiving signal | CPU_RX1- | **A6** | **B6** | CPU_TX1- | High-speed port data sending signal |
| Ground | GND | **A7** | **B7** | GND | Ground |
| Sideband signal | P0_SB_7A | **A8** | **B8** | P0_SB_0A | Sideband signal |
| Sideband signal | P0_SB_4A | **A9** | **B9** | P0_SB_1A | Sideband signal |
| Sideband signal | P0_SB_3A | **A10** | **B10** | P0_SB_2A | Sideband signal |
| Sideband signal | P0_SB_A+ | **A11** | **B11** | P0_SB_5A | Sideband signal |
| Sideband signal | P0_SB_A- | **A12** | **B12** | P0_SB_6A | Sideband signal |
| Ground | GND | **A13** | **B13** | GND | Ground |
| High-speed port data receiving signal | CPU_RX2+ | **A14** | **B14** | CPU_TX2+ | High-speed port data sending signal |
| High-speed port data receiving signal | CPU RX2- | **A15** | **B15** | CPU TX2- | High-speed port data sending signal |
| Ground | GND | **A16** | **B16** | GND | Ground |
| High-speed port data receiving signal | CPU RX3+ | **A17** | **B17** | CPU TX3+ | High-speed port data sending signal |
| High-speed port data receiving signal | CPU_RX3- | **A18** | **B18** | CPU_TX3- | High-speed port data sending signal |
| Ground | GND | **A19** | **B19** | GND | Ground |
| High-speed port data receiving signal | CPU_RX4+ | **A20** | **B20** | CPU_TX4+ | High-speed port data sending signal |
| High-speed port data receiving signal | CPU_RX4- | **A21** | **B21** | CPU_TX4- | High-speed port data sending signal |
| Ground | GND | **A22** | **B22** | GND | Ground |
| High-speed port data receiving signal | CPU_RX5+ | **A23** | **B23** | CPU_TX5+ | High-speed port data sending signal |
| High-speed port data receiving signal | CPU_RX5- | **A24** | **B24** | CPU_TX5- | High-speed port data sending signal |
| Ground | GND | **A25** | **B25** | GND | Ground |
| Sideband signal | P0_SB_7B | **A26** | **B26** | P0_SB_0B | Sideband signal |
| Sideband signal | P0_SB_4B | **A27** | **B27** | P0_SB_1B | Sideband signal |
| Sideband signal | P0_SB_3B | **A28** | **B28** | P0_SB_2B | Sideband signal |
| Sideband signal | P0_SB_B+ | **A29** | **B29** | P0_SB_5B | Sideband signal |
| Sideband signal | P0_SB_B- | **A30** | **B30** | P0_SB_6B | Sideband signal |
| Ground | GND | **A31** | **B31** | GND | Ground |
| High-speed port data receiving signal | CPU_RX6+ | **A32** | **B32** | CPU_TX6+ | High-speed sending signal |
| High-speed port data receiving signal | CPU_RX6- | **A33** | **B33** | CPU_TX6- | High-speed sending signal |
| Ground | GND | **A34** | **B34** | GND | Ground |
| High-speed port data receiving signal | CPU_RX7+ | **A35** | **B35** | CPU_TX7+ | High-speed sending signal |
| High-speed port data receiving signal | CPU_RX7- | **A36** | **B36** | CPU_TX7- | High-speed sending signal |
| Ground | GND | **A37** | **B37** | GND | Ground |

Different port definitions are required when the connector is applied to different ports (different I/O ports of the CPU) and is connected to different types of high-speed units 200. Therefore, a multiplexing relationship may be defined for the sideband signal in the connector. When the high-speed signal is separately used as a PCIe network port, a SAS/SATA network port, or an ETH network port, different signal definitions may be assigned to the sideband signal, to meet requirements of different high-speed units 200. Details are as follows.

**Table 2 Multiplexing relationship of the sideband signal**

| Signal type | Basic comp uting unit side | Connected to an NVMe hard disk backplane | Connected to a riser (standard PCIe card) | Connected to an OCP NIC inserted card | Connected to a SAS hard disk backplane | Connected to an ETHNIC inserted card |
|---|---|---|---|---|---|---|
| High-speed signal | High-speed pin | PCIe | PCIe | PCIe | SAS/SATA | ETH |
| Sideband signal | A8 | BP_TYPE_0 | PCIe_100MHZ_P0 | PCIe_100MHZ_P1 | BP_TYPE_0 | RSVD |
| | A9 | HP I2C RST0 | PCIe_100MHZ_N0 | PCIe_100MHZ_N1 | SGPIO_DOUT0 | BMC 12C RSTO |
| | A10 | GND | GND | GND | GND | GND |
| | A11 | PCIe_100MHZ_P0 | /ALERT_VPP | RSVD | RSVD | RSVD |
| | A12 | PCIe_100MHZ_N0 | /Riser_prsnt | RSVD | RSVD | RSVD |
| | A26 | BP_TYPE_1 | PCIe_100MHZ_P1 | PCIe_100MHZ_P1 | BP_TYPE_1 | RSVD |
| | A27 | HP I2C RST1 | PCIe_100MHZ_N1 | PCIe_100MHZ_N1 | SGPIO_DOUT1 | CPU_MDIO_DAT |
| | A28 | GND | GND | GND | GND | GND |
| | A29 | PCIe_100MHZ_P1 | /RST_PERST | RSVD | RSVD | RSVD |
| | A30 | PCIe_100MHZ_P1 | CABLE_PRSNT | CABLE_PRSNT | RSVD | RSVD |
| | B8 | HP_I2C_CLK0 | VCC_3V3 | RSVD | SGPIO_CLK0 | BMC_I2C_CLK0 |
| | B9 | HP_I2C_DAT0 | /PCIe_DEV_WAKE | /PCIe_DEV_WAKE | SGPIO_LOAD0 | BMC_I2C_DAT0 |
| | B10 | GND | GND | GND | GND | GND |
| | B11 | PCIe_RST0 | CPU_I2C_CLK | CPU_I2C_CLK | SGPIO_DIN0 | CPU_MDIO_CLK |
| | B12 | Device_PRSNT0 | CPU_I2C_DAT | CPU_I2C_DAT | CNTRLR_TYPE_0 | DEVICE_PRSNT |
| | B26 | HP_I2C_CLK1 | CABLE_PRSNT_LOOP | CABLE_PRSNT_LOOP | SGPIO_CLK1 | CPU_I2C_CLK1 |
| | B27 | HP_I2C_DAT1 | STBY_3V3 | RSVD | SGPIO_LOAD1 | CPU_I2C_DAT1 |
| | B28 | GND | GND | GND | GND | GND |
| | B29 | PCIe_RST1 | BMC_I2C_CLK | BMC_I2C_CLK | SGPIO_DIN1 | RSVD1 |
| | B30 | Device_PRSNT1 | BMC_I2C_DAT | BMC_I2C_DAT | CNTRLR_TYPE_1 | Cable_prsnt |

To transmit different types of high-speed signals, for example, a PCIe-type high-speed signal and an ETH-type high-speed signal, in this embodiment of this application, different types of pins are selected from pins of the connector 106 that are configured to transmit the sideband signal, to define the transmission interface. Different types of pins may be further selected from the pins of the connector 106 that are configured to transmit the sideband signal, to transmit the unit type. For ease of differentiation, in this embodiment of this application, the pin configured to transmit the unit type is referred to as a first pin, and the pin configured to transmit the unit requirement is referred to as a second pin.

In some embodiments, the first pin may be A8, A26, and B 10, as shown below.

**Table 3 Definition of the first pin**

| **Pin number** | **Net** | **Signal** | **Direction** | **Description** |
|---|---|---|---|---|
| A8 | P0_SB_7A | BP_TYPE 0 | In | BP_TYPE [2:0] indicates a type of a peripheral high-speed unit |
| A26 | P0_SB_7B | BP_TYPE 1 | In | |
| B10 | P0_SB_2A | BP_TYPE 2 | In | |

Three (low-speed) sideband signals, namely, P0_SB_7A, P0_SB_7B, and P0_SB_2A may be used as unit type (BP_type) detection signals. The BP_type detection signal is used as an indication signal sent by a unit to a BCU. The signal is pulled up on the BCU and then enters a CPLD. The high-speed unit 200 is suspended or pulled down, and a type of the high-speed unit 200 connected to the connector (for example, a UBC or a UBC-DD) may be distinguished by using different BP_type combinations, to distinguish between purposes of other sideband signals inside CPLD logic.

Specifically, the high-speed unit 200 may indicate a unit type of the high-speed unit 200 by using BP_TYPE [2:0], as shown in the following table.

**Table 4 Unit type identifier**

| BP_TYPE **[2:0]** | **Type of a unit connected to a high-speed port** |
|---|---|
| 000 | SAS/SATA hard disk backplane |
| 001 | Reserved |
| 010 | Reserved |
| 011 | NVMe hard disk backplane |
| 100 | OCP network adapter, a redundant array of independent disks (Redundant Array of Independent Disks, Raid) card, and a baseband unit (baseband unit, BBU) module |
| 101 | Integrated network adapter directly connected to a CPU |
| 110 | PCIe riser |
| 111 | Huawei cache coherency system (Huawei Cache Coherence System, HCCS) directly connected to the CPU |

It should be noted that BP_type [0] may further be used as an insertion stability detection signal of the high-speed unit 200. The following describes a detection principle thereof in detail.

The basic computing unit 100 may sample BP_TYPE [2:0] by using the CPLD (or another controller, for example, an FPGA or an MCU), and adaptively configure remaining sideband signals (which are specifically transmission interfaces in the sideband signals) based on a unit type obtained through sampling, as shown below.

**Table 5 Definition of the transmission interface**

| | | **BP_TYPE [2:0] = 000** | | **BP_TYPE [2:0] = 011** | | **BP_TYPE [2:0] = 100** | |
|---|---|---|---|---|---|---|---|
| **Pin** | | **Signal definition** | **Direction** | **Signal definition** | **Direction** | **Signal definition** | **Direction** |
| A10 | P0_SB_3A | GND | \ | GND | \ | GND | \ |
| A11 | P0_SB_A+ | REF_CLK0_P | Out | REF_CLK0_P | Out | REF_CLK0_P | Out |
| A12 | P0_SB_A- | REF_CLK0_N | Out | REF_CLK0_N | Out | REF_CLK0_N | Out |
| A28 | P0_SB_3B | GND/NC | \ | GND/NC | \ | GND/NC | \ |
| A29 | P0_SB_B+ | REF_CLK1_P | Out | REF_CLK1_P | Out | REF_CLK1_P | Out |
| A30 | P0_SB_B- | REF_CLK1_N | Out | REF_CLK1_N | Out | REF_CLK1_N | Out |
| B28 | P0_SB_2B | V_STBY_3V3 | Out | V_STBY_3V3 | Out | V_STBY_3V3 | Out |
| B30 | P0_SB_6B | TOPOLOGY_DET | In | TOPOLOGY_DET | In | TOPOLOGY_DET | In |
| A9 | P0_SB_4A | SGPIO_DOUT0 | Out | HP_I2C_RST0 | Out | PCIe_PWRBRK# | Out |
| A27 | P0_SB_4B | SGPIO_DOUT1 | Out | HP_I2C_RST1 | Out | PCIe_WAKE# | In |
| B8 | P0_SB_0A | SGPIO_CLK0 | Out | HP_I2C_CLK0 | Out | BMC_I2C_CLK0 | Out |
| B9 | P0_SB_1A | SGPIO_LOAD0 | Out | HP_I2C_DAT0 | In/Out | BMC_I2C_DAT0 | In/Out |
| B11 | P0_SB_5A | SGPIO_DIN0 | In | PCIe_RST0 | Out | PCIe_RST0 | Out |
| B12 | P0_SB_6A | TOPOLOGY_DET0 | In | CHANGE_DET0 | In | DEVICE_PRSNT0 | In |
| B26 | P0_SB_0B | SGPIO_CLK1 | Out | HP_I2C_CLK1 | Out | CPU_I2C_CLK1 | Out |
| B27 | P0_SB_1B | SGPIO_LOAD1 | Out | HP_I2C_DAT1 | In/Out | CPU_I2C_DAT1 | In/Out |
| B29 | P0_SB_5B | SGPIO_DIN1 | In | PCIe_RST1 | Out | PCIe_RST1 | Out |

| | | **BP_TYPE [2:0] = 101** | | **BP_TYPE [2:0] = 110** | | **BP_TYPE [2:0] = 111** | |
|---|---|---|---|---|---|---|---|
| **Pin** | | **Signal definition** | **Direction** | **Signal definition** | **Direction** | **Signal definition** | **Direction** |
| A10 | P0_SB_3A | GND | \ | GND | \ | GND | \ |
| A11 | P0_SB_A+ | REF_CLK0_P | Out | REF_CLK0_P | Out | REF_CLK0_P | Out |
| A12 | P0_SB_A- | REF_CLK0_N | Out | REF_CLK0_N | Out | REF_CLK0_N | Out |
| A28 | P0_SB_3B | GND/NC | \ | GND/NC | \ | GND/NC | \ |
| A29 | P0_SB_B+ | REF_CLK1_P | Out | REF_CLK1_P | Out | REF_CLK1_P | Out |
| A30 | P0_SB_B- | REF_CLK1_N | Out | REF_CLK1_N | Out | REF_CLK1_N | Out |
| B28 | P0_SB_2B | V_STBY_3V3 | Out | V_STBY_3V3 | Out | V_STBY_3V3 | Out |
| B30 | P0_SB_6B | TOPOLOGY_DET | In | TOPOLOGY_DET | In | TOPOLOGY_DET | In |
| A9 | P0_SB_4A | BMC I2C RSTO | Out | PCIe_PWRBRK# | Out | PCIe_PWRBRK# | Out |
| A27 | P0_SB_4B | BMC I2C RSTO | Out | PCIe_WAKE# | In | PCIe_WAKE# | In |
| B8 | P0_SB_0A | BMC_I2C_CLK0 | Out | BMC_I2C_CLK0 | Out | BMC_I2C_CLK0 | Out |
| B9 | P0_SB_1A | BMC_I2C_DAT0 | In/Out | BMC_I2C_DAT0 | In/Out | BMC_I2C_DAT0 | In/Out |
| B11 | P0_SB_5A | CPU_MDIO_CLK | Out | PCIe_RST0 | Out | PCIe_RST0 | Out |
| B12 | P0_SB_6A | DEVICE_PRSNT0 | In | JTAG_TRST/AC_LOSS | Out | DEVICE_PRSNT0 | In |
| B26 | P0_SB_0B | CPU_I2C_CLK1 | Out | RESV1/RESV3 | Out | CPU_I2C_CLK1 | Out |
| B27 | P0_SB_1B | CPU_I2C_DAT1 | In/Out | RESV2/RESV4 | Out | CPU_I2C_DAT1 | In/Out |
| B29 | P0_SB_5B | RSVD1 | Out | PCIe_CLKREQ# | Out | PCIe_RST1 | Out |

P0_SB_3A is defined as GND, used as a reference GND of high-speed same-source clocks. P0_SB_2B is defined as Vstby_3v3, used as a 3.3 V standby power supply provided by the basic computing unit 100 side to the high-speed unit 200 side. To protect a cable and the connector 106, the basic computing unit 100 side may provide an overcurrent protection function for power supplying by P0_SB_2B. P0_SB_3B is defined as not connect (not connect, NC). Because the pin P0_SB_2B at a peer end of the connector 106 is already defined as a power supply, P0_SB_3B is directly suspended to avoid a power supply short circuit caused by interconnection of the connectors 106 on the basic computing unit 100 side. Two groups of signals, namely, P0_SB_A+/P0_SB_A- and P0_SB_B+/P0_SB_B-, are defined as high-speed signal same-source clocks, used for high-speed port synchronization.

P0_SB_6B is defined as a transmission interface, also referred to as a cable detection signal TOPOLOGY_DET. The transmission interface may be a single-wire transmission interface, and is used by the high-speed unit 200 to report a unit requirement of the peripheral high-speed unit 200 to the basic computing unit 100 side. The unit requirement may include one or more of a port type, a link bit width, a maximum port rate, a lane sequence reversal capability, a signal polarity reversal capability, and a hot swap capability. The lane sequence reversal capability identifies whether the connector 106 supports the lane sequence reversal capability, the signal polarity reversal capability identifies whether the connector 106 supports signal polarity reversal, and the hot swap capability identifies whether the connector 106 supports hot swap.

For the multiplexed sideband signal, the following separately describes signal transfer and analysis processes based on different connected high-speed units 200.

When the connected high-speed unit 200 is the SAS/SATA hard disk backplane, the high-speed unit 200 transfers BP_type [2:0] = 000 to the BCU. Based on the BP_type, two groups of SGPIO signals may be provided on an external high-speed interface of the BCU for hard disk indicator-blinking. In addition, one cable detection signal is added for use by a high-speed cable. A signal definition is compatible with a signal definition in the universal backplane management (Universal Backplane Management, UBM) protocol standard.

When the connected high-speed unit 200 is the NVMe hard disk backplane, the high-speed unit 200 transfers BP_type [2:0] = 011 to the BCU module. Based on the BP_type, two groups of HP_I2C signals may be provided on an external high-speed interface of the BCU for a hard disk hot swap operation. In addition, two I2C reset signals are provided for matching, two PCIe reset signals are provided, and one CHANGE DET# interrupt signal is provided. A signal definition is compatible with the signal definition in the UBM protocol standard.

When the connected high-speed unit 200 is the OCP network adapter/Raid cardBBU module, the high-speed unit 200 transfers BP_type [2:0] = 100 to the BCU. Based on the BP_type, one group of BMC_I2C signals used by an out-of-band management system to manage a unit, and one group of CPU_I2C signals used by an in-band CPU to manage a unit may be provided on an external high-speed interface of the BCU. In addition, two PCIe platform reset signals, one PCIe_PWRBRK# signal, one PCIe WAKE# signal, and one device in-position indication signal are provided for matching. A signal definition is compatible with a signal definition in an OCP standard protocol.

When the connected high-speed unit 200 is the NIC network adapter directly connected to the CPU, the high-speed unit 200 transfers BP_type [2:0] = 101 to the BCU. Based on the BP_type, one group of BMC_I2C signals used by an out-of-band management system to manage a unit, one group of CPU_I2C used by an in-band CPU to manage a unit, and one group of MDIO used by the in-band CPU to manage a unit may be provided on an external high-speed interface of the BCU. In addition, one I2C reset signal, one device in-position indication signal, and one reserved signal are provided for matching.

When the connected high-speed unit 200 is a riser module, the high-speed unit 200 transfers BP_type [2:0] = 110 to the BCU module. Based on the BP_type, one group of BMC_I2C signals used by an out-of-band management system to manage a unit may be provided on an external high-speed interface of the BCU. In addition, one PCIe platform reset signal, one PCIe PWRBRK# signal, one PCIe WAKE# signal, one JTAG_TRST/AC_LOSS signal, one PCIe_CLKREQ# signal, and two reserved signals are provided for matching. A signal definition is compatible with a signal definition in a PCI express card electromechanical specification standard protocol.

The SPGIO signal is used for hard disk indicator-blinking control on the high-speed unit 200, and a signal definition complies with an SFF-8485 protocol standard. The HP_I2C signal is used for hot swap device control on the high-speed unit 200, and a signal definition complies with an I2C standard definition. The BMC_I2C signal is used for out-of-band management control on the high-speed unit 200, and a signal definition complies with the I2C standard definition. The CPU_I2C signal is used by the in-band CPU to manage the high-speed unit 200, and a signal definition complies with the I2C standard definition. The MDIO signal is used by the in-band CPU to manage a high-speed unit 200 of a NIC card type, and a signal definition complies with a standard definition of MDIO in clause 22 of 802.3. The CHANGE_DET signal is used by the high-speed unit 200 to report an interrupt to the BCU, and a signal definition complies with a definition of CHANGE_DET in SFF-TA-1005 specification for UBM. The PCIe_PWRBRK/PCIe_WAKE/PCIe_RST/PCIe_CLKREQ/JTAG_TRST signal is used for PCIe standard device control on the high-speed unit 200, and a signal definition complies with a signal definition in the PCI express card electromechanical specification standard protocol.

In some possible implementations, the unit requirement is stored in the memory 202 of the high-speed unit 200. The memory 202 may be an independent memory. When the high-speed unit 200 includes a unit requirement reporting module 208, the memory 202 may alternatively be a built-in memory of the unit requirement reporting module 208. The memory 202 may be an electrically erasable programmable read-only memory (electrically erasable programmable read-only memory, EEPROM), a mask-programmed read-only memory (Mask-programmed read-only memory, MROM), or the like. The unit requirement reporting module 208 (including but not limited to being implemented by using CPLD logic) in the peripheral high-speed unit 200 may read the unit requirement in the memory 202, and transmit the unit requirement to the controller 104 through the transmission interface provided by the connector 106 (including but not limited to being implemented by using CPLD logic). The controller 104 analyzes the unit requirement, and transfers the unit requirement after the analysis to the processor 102. The processor 102 adapts a port mode of a port to the high-speed unit 200 in a startup phase, to implement adaptive configuration of the port.

The transmission interface may use a single-wire transmission communication protocol. The protocol is specifically a private communication protocol, and a protocol layer may use a HiSport interface protocol. The single-wire transmission communication protocol defines a bus signal frequency, a check manner, and a maximum amount of data transmitted at a time. In this example, the bus signal frequency may be 250 kilohertz (kHz), the check manner is a standard cyclic redundancy check (Cyclic redundancy check, CRC), and the maximum amount of data transmitted at a time may be 32 bytes (bytes, B).

32-byte data and 1-byte CRC content transmitted through the transmission interface are defined as follows.

**Table 6 Transmission content of the transmission interface**

| **Byte sequence number** | **Function** | **Classification** | **Function** |
|---|---|---|---|
| 1 | Cable detection | Identifier | High-speed topology discovery |
| 2 | Unit index | Identifier | |
| 3 and 4 | Unit type | Identifier | |
| 5 to 18 | Unit ID | Identifier | |
| 19 | Port information | Identifier | High-speed port configuration |
| 20 | Parameter byte 1 | Attribute of a port | |
| 21 | Parameter byte 2 | | |
| 22 | Parameter byte 3 | | |
| 23 | Parameter byte 4 | | |
| 24 | Parameter byte 5 | | |
| 25 | Parameter byte 6 | | |
| 26 to 32 | Reserved | Identifier | |
| 33 | CRC check | Check | |

In the foregoing content, content related to port mode configuration includes the unit type, the port information, and the parameter (the attribute of the port). The port information identifies a type of the port, and the parameter is used to define the attribute of the port. For details, refer to the following table.

**Table 7 Port information and parameter definition**

| **Port information** | | **Parameter BYTE 1** | **Parameter BYTE 2** | **Parameter BYTE 3** | **Parameter BYTE 4** | **Parameter BYTE 5** | **Parameter BYTE 6** |
|---|---|---|---|---|---|---|---|
| Default Configuration | 0000_0000 | 0000_0000 | 0000_0000 | 0000_0000 | 0000_0000 | 0000_0000 | 0000_0000 |
| PCIe | 0000_0001 | Link width | Rate/Hot swap/Lane reversal | 0000_0000 | 0000_0000 | Reserved | Reserved |
| HCCS | 0000_0010 | 0000_0000 | Rate/Lane reversal | Polarity reversal RX | Polarity reversal TX | Reserved | Reserved |
| PCIe + SATA | 0000_0011 | For a link width, refer to the PCIe | Rate/Hot swap/Lane reversal | 0000_0000 | 0000_0000 | Reserved | Reserved |
| SAS | 0000_0100 | 0000_0000 | Rate | Polarity reversal RX | Polarity reversal TX | Reserved | Reserved |
| CXL | 0000_0101 | Link width | Rate/Hot swap/Lane reversal | 0000_0000 | 0000_0000 | Reserved | Reserved |
| ETH | 0000_0110 | 0000_0000 | 0000_0000 | 0000_0000 | 0000_0000 | Reserved | Reserved |
| USB | 0000_0111 | 0000_0000 | 0000_0000 | 0000_0000 | 0000_0000 | Reserved | Reserved |

The parameter BYTE 1 (also referred to as a parameter 1) defines the link width, as shown in the following table.

**Table 8 Definition of the parameter BYTE 1**

| **Byte sequence number** | **Bitstream of bits** | **Information content** |
|---|---|---|
| Parameter 1 | 0000_0000 | Default value |
| Parameter 1 | 0000_0001 | x16 |
| Parameter 1 | 0000_0010 | x8 |
| Parameter 1 | 0000_0011 | x4x4 |
| Parameter 1 | 0000_0100 | x2x2x2x2 |
| Parameter 1 | 0000_0101 | x4x2x2 |
| Parameter 1 | 0000_0110 | x2x2x4 |

Bits [7:4] of the parameter BYTE 2 (also referred to as a parameter 2) define the maximum port rate, as shown in the following table.

**Table 9 Definition of the bits [7:4] of the parameter BYTE 2**

| **Byte sequence number** | **Bitstream of bits** | **Information content** |
|---|---|---|
| Parameter 2 | 0000 | None |
| Parameter 2 | 0001 | GEN1 |
| Parameter 2 | 0010 | GEN2 |
| Parameter 2 | 0011 | GEN3 |
| Parameter 2 | 0100 | GEN4 |
| Parameter 2 | 0101 | GEN5 |
| Parameter 2 | 0110 | ... |

A bit [3] and a bit [2] of the parameter BYTE 2 (also referred to as the parameter 2) define the hot swap capability and the lane reversal capability of the port respectively. For details, refer to the following table.

**Table 10 Definition of the bit [3] of the parameter BYTE 2**

| **Byte sequence number** | **Bitstream of bits** | **Information content** |
|---|---|---|
| Parameter 2 | 0 | Not supported |
| Parameter 2 | 1 | Supported |

**Table 11 Definition of the bit [2] of the parameter BYTE 2**

| **Byte sequence number** | **Bitstream of bits** | **Information content** |
|---|---|---|
| Parameter 2 | 0 | Not reversed |
| Parameter 2 | 1 | Reversed |

Bits [1:0] of the parameter BYTE 2 are reserved bits, and may be used to define another attribute of the port.

The parameter BYTE 3 (also referred to as a parameter 3) and the parameter BYTE 4 (also referred to as a parameter 4) are used to define polarity reversal, where the parameter 3 is used to define polarity reversal RX, and the parameter 4 is used to define polarity reversal TX. This is shown in the following table.

**Table 12 Definition of the parameter BYTE 3**

| **Byte sequence number** | **Bitstream of bits** | **Information content** |
|---|---|---|
| Parameter 3 | 0000_0000 | None/Not reversed by default |
| Parameter 3 | 0000_0001 | Indicates lane 0 polarity reversal |
| Parameter 3 | 0000_0010 | Indicates lane 1 polarity reversal |
| | | ... by analogy |
| | | Indicates lane n polarity reversal |

**Table 13 Definition of the parameter BYTE 4**

| **Byte sequence number** | **Bitstream of bits** | **Information content** |
|---|---|---|
| Parameter 4 | 0000_0000 | None/Not reversed by default |
| Parameter 4 | 0000_0001 | Indicates lane 0 polarity reversal |
| Parameter 4 | 0000_0010 | Indicates lane 1 polarity reversal |
| | | ... by analogy |
| | | Indicates lane n polarity reversal |

As shown in FIG. 1, when the connector 106 transmits, to the controller 104 by using the foregoing pins, the unit requirement including the port type, the maximum port rate, the lane sequence reversal capability, the polarity reversal capability, and the hot swap capability, after the controller 104 transmits the unit requirement to the processor 102, the processor 102 may implement port mode adaptation. Correspondingly, the processor 102 may receive, through the connector 106, a corresponding type of high-speed signal transmitted by the high-speed unit 200, instead of being limited to a fixed type of high-speed signal.

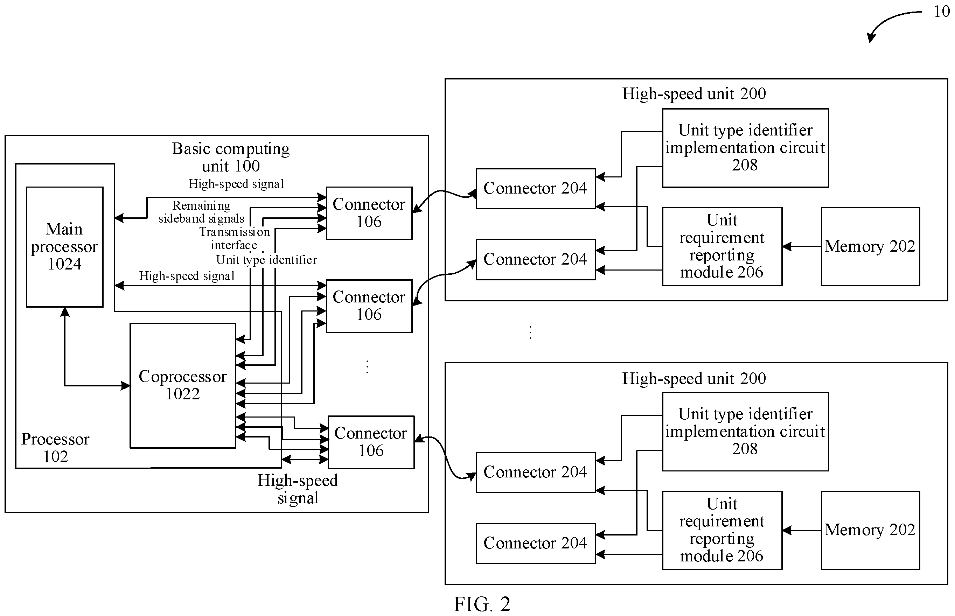

In some possible implementations, as shown in FIG. 2, a main processor 1024 and a coprocessor 1022 may be packaged in a processor 102 of a basic computing unit 100. The coprocessor 1022 is configured to assist the main processor 1024 in the processor 102 in completing processing work that cannot be performed by the main processor 1024 or that has low execution efficiency or a low execution effect. When the coprocessor 1022 is packaged in the processor 102, the coprocessor 1022 may sample a first pin of the connector 106 to obtain a unit type, and configure, based on the unit type, a sideband signal corresponding to the high-speed unit 200. Then, the coprocessor 1022 obtains a unit requirement of the high-speed unit 200 through a transmission interface in the sideband signal. The coprocessor 1022 may transfer the unit requirement to the main processor 1024, and the main processor 1024 adapts a port mode of a port of the processor 102 to the high-speed unit 200 based on the unit requirement. In other words, in the example in FIG. 2, a function of the controller 104 may be implemented by the coprocessor 1022, and the basic computing unit 100 may not include the controller 104.

Next, a procedure of a connector-based port management method in embodiments of this application is described in detail with reference to the accompanying drawings.

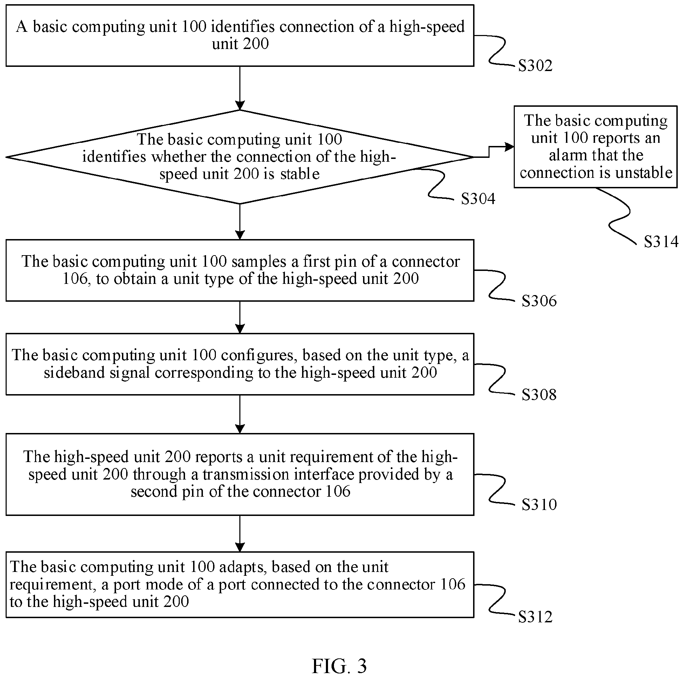

FIG. 3 is a flowchart of a connector-based port management method. The method includes the following steps.

S302: A basic computing unit 100 identifies connection of a high-speed unit 200.

The high-speed unit 200 is specifically a unit configured to extend a function of the basic computing unit 100. The high-speed unit 200 usually has a relatively high I/O rate. Based on different extended functions, the unit 200 may include one or more of a storage unit, an I/O unit, an acceleration unit, and a memory expansion unit.

In this embodiment, the high-speed unit 200 may be classified into different types of units based on supported protocol types. For example, the high-speed unit 200 may include different types of units such as a PCIe unit, an ETH unit, a SAS unit, and a SATA unit.

The high-speed unit 200 may be connected to the basic computing unit 100, to extend the function of the basic computing unit 100. There may be a plurality of connection manners. In some embodiments, the high-speed unit 200 may be connected to the basic computing unit 100 in an insertion manner. In some other embodiments, the high-speed unit 200 may be connected to the basic computing unit 100 in a buckling manner.

The basic computing unit 100 identifies whether there is connection of the high-speed unit 200. For example, when the high-speed unit 200 is connected to the basic computing unit 100 in an insertion manner, the basic computing unit 100 may identify, in a manner such as detecting an in-position signal, whether there is connection of the high-speed unit 200. The basic computing unit 100 may perform a subsequent procedure when identifying that there is connection of the high-speed unit 200.

S304: The basic computing unit 100 identifies whether connection of the high-speed unit 200 is stable. If yes, perform S306; or if no, perform S314.

It is considered that a case in which connection of the high-speed unit 200 is unstable exists. For example, when the high-speed unit 200 is inserted into the basic computing unit 100, insertion of the high-speed unit 200 may be unstable, and consequently, a connection between the high-speed unit 200 and the basic computing unit 100 is intermittently interrupted. For this, the basic computing unit 100 may further identify whether connection of the high-speed unit 200 is stable.

For example, the basic computing unit 100 may detect an in-position signal of a connector 204 in the high-speed unit 200, to identify whether connection of the high-speed unit 200 is stable. When connection of the high-speed unit 200 is unstable, the basic computing unit 100 may perform S314 to provide an alarm prompt, to remind a user to re-connect the high-speed unit. When connection of the high-speed unit 200 is stable, S306 may be performed to enable port management that is based on the connector 106.

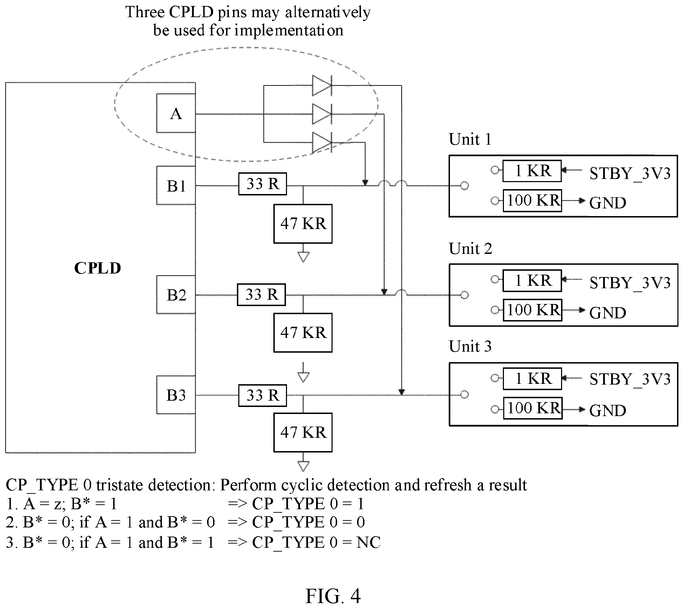

FIG. 4 is a diagram of stable connection detection. An output pin A and an input pin B may be designed for a controller 104, for example, a CPLD, in a basic computing unit 100. A high-impedance state is first output to the pin A when BP_type tristate detection is started to be performed by using CPLD logic. If a high level is detected at the pin B, it indicates that a high-speed unit 200 is in position, and BP_type [0] = 1. If a low level is detected at the pin B, a high level is output to the pin A, and a level of the pin B is detected again. If a low level is still detected at the pin B, it indicates that a high-speed unit 200 is in position, and BP_type [0] = 0. If a high level is detected at the pin B, it indicates that a high-speed unit 200 is not in position. The basic computing unit 100 continuously detects, by using the CPLD, whether the high-speed unit 200 is in position, for example, detects, in N consecutive periodicities, whether the high-speed unit 100 is in position, to detect whether connection of the high-speed unit 200 is stable.

It should be noted that S304 may alternatively not be performed when the method in this embodiment of this application is performed. For example, the basic computing unit 100 may alternatively directly perform S306, to perform a port management method that is based on a connector 106.

S306: The basic computing unit 100 samples a first pin of the connector 106, to obtain a unit type of the high-speed unit 200.

Specifically, a first pin is provided on the connector 106, and is configured to transmit the unit type of the high-speed unit. For example, pins whose pin sequence numbers are A8, A26, and B 10 are provided on a 74-pin connector 106, to transmit the unit type of the high-speed unit. The basic computing unit 100 may sample the first pin of the connector 106 to obtain a unit type identifier of the high-speed unit 200, where the unit type identifier identifies the unit type of the high-speed unit 200.

In some possible implementations, the basic computing unit 100 includes a controller 104, and the basic computing unit 100 may sample the first pin by using the controller 104, to obtain the unit type of the high-speed unit 200. The controller 104 has a unit type identification circuit. The controller 104 may sample the first pin, and identify a signal of the first pin based on the unit type identification circuit, to obtain the unit type. In some other possible implementations, when a coprocessor 1022 is packaged in a processor 102 of the basic computing unit 100, the basic computing unit 100 may sample the first pin by using the coprocessor 1022, to obtain the unit type of the high-speed unit.

S308: The basic computing unit 100 configures, based on the unit type, a sideband signal corresponding to the high-speed unit 200.

In some possible implementations, the basic computing unit 100 includes a controller 104, the controller 104 has a sideband signal configuration implementation circuit, and the basic computing unit 100 may implement, by using the sideband signal configuration implementation circuit, the sideband signal corresponding to the high-speed unit 200.

In some other possible implementations, a coprocessor 1022 is packaged in a processor 102 of the basic computing unit 100, and the coprocessor 1022 may configure, based on the unit type, the sideband signal corresponding to the high-speed unit, to implement adaptive configuration of the sideband signal.

It should be noted that S306 to S308 may alternatively not be performed in the method in this embodiment of this application. For example, the basic computing unit 100 may directly perform S310.

S310: The high-speed unit 200 reports a unit requirement of the high-speed unit 200 through a transmission interface provided by a second pin of the connector 106.

The second pin of the connector 106 is configured to transmit the unit requirement of the high-speed unit 200. Specifically, the second pin defines a transmission interface, and the high-speed unit 200 may actively report a unit requirement through the transmission interface.

The unit requirement includes one or more of a port type, a link bit width, a maximum port rate, a lane sequence reversal capability, a signal polarity reversal capability, and a hot swap capability. Refer to Table 6. The unit requirement may be represented by using 32-byte content.

It should be noted that S310 is merely an implementation in which the basic computing unit 100 obtains the unit requirement transmitted by the high-speed unit 200 in this embodiment of this application. In another possible implementation of this embodiment of this application, the basic computing unit 100 may alternatively obtain the unit requirement in another manner. For example, the basic computing unit 100 may send a read request to the high-speed unit 200. In response to the read request, the high-speed unit 200 receives, through the transmission interface provided by the connector 106, the unit requirement returned by the high-speed unit 200.

S312: The basic computing unit 100 adapts, based on the unit requirement, a port mode of a port connected to the connector 106 to the high-speed unit 200.

Specifically, the processor 102 of the basic computing unit 100 has a port, and the port has a plurality of port modes. Different port modes correspond to different port attributes. For example, in one port mode, a port type may be a PCIe type. For another example, in another port mode, a port type may be a SAS. The basic computing unit 100 may adapt the port mode of the port to the high-speed unit 200 based on the unit requirement, so that the port of the processor 102 is configured as a high-speed port required by the high-speed unit 200, thereby implementing port mode adaptation.

S314: The basic computing unit 100 reports an unstable connection alarm.

The unstable connection alarm is used to warn a user that the high-speed unit 200 is unstably connected to the basic computing unit 100. The unstable connection alarm may be implemented in a plurality of forms. In some embodiments, the basic computing unit 100 may play an alarm sound to generate an alarm, or present an alarm message in an alarm interface.

It should be noted that S314 is an optional step in this embodiment of this application, and S314 may alternatively not be performed when the method in this embodiment of this application is performed.

Based on the foregoing content description, an embodiment of this application provides a port management method that is based on a connector 106. In the method, a basic computing unit 100 may transmit a unit requirement based on a transmission interface defined by the connector 106, and adapt a port mode of a port to a high-speed unit 200 based on the unit requirement, to implement port mode adaptation, and further implement high-speed signal adaptation. A high-speed signal definition in a port definition on the connector 106 may be adaptive based on a unit type. When the port supports a plurality of port modes, one connector 106 may be configured to transmit different types of high-speed signals. Therefore, a flexible and configurable feature of the port can be fully used, to facilitate flexible and differentiated configuration of the full kit.

The foregoing embodiment describes port management performed based on a 74-pin high-speed connector such as a UBC. In some possible implementations, the basic computing unit 100 may alternatively perform port management based on a 184-pin high-speed connector such as a UBC-DD. The UBC-DD includes an x 16 high-speed signal, some out-of-band low-speed signals, and a power signal, and supports a 150 W power supply capability and a maximum of two 75 W PCIe standard cards. Details are as follows.

**Table 14 Example of the interface pin map (pin map) of the 184-pin high-speed connector**

| **Description** | **Net** | **Pin number** | | **Net** | **Description** |
|---|---|---|---|---|---|
| Ground | GND | **AU1** | **BU1** | GND | Ground |
| Low-speed management control signal | P0_SB_7B | **AU2** | **BU2** | P0_SB_0B | Low-speed management control signal |
| Low-speed management control signal | P0_SB_4B | **AU3** | **BU3** | P0_SB_1B | Low-speed management control signal |
| Ground | GND | **AU4** | **BU4** | GND | Ground |
| High-speed port data receiving signal | RX0+ | **AU5** | **BU5** | TX0+ | High-speed port data sending signal |
| High-speed port data receiving signal | RX0- | **AU6** | **BU6** | TX0- | High-speed port data sending signal |
| Ground | GND | **AU7** | **BU7** | GND | Ground |
| High-speed port data receiving signal | RX2+ | **AU8** | **BU8** | TX2+ | High-speed port data sending signal |
| High-speed port data receiving signal | RX2- | **AU9** | **BU9** | TX2- | High-speed port data sending signal |
| Ground | GND | **AU10** | **BU10** | GND | Ground |
| Low-speed management control signal | P0_SB_B+ | **AU11** | **BU11** | P0_SB_5B | Low-speed management control signal |
| Low-speed management control signal | P0_SB_B- | **AU12** | **BU12** | P0_SB_6B | Low-speed management control signal |
| Ground | GND | **AU13** | **BU13** | GND | Ground |
| High-speed port data receiving signal | RX4+ | **AU14** | **BU14** | TX4+ | High-speed port data sending signal |
| High-speed port data receiving signal | RX4- | **AU15** | **BU15** | TX4- | High-speed port data sending signal |
| Ground | GND | **AU16** | **BU16** | GND | Ground |
| High-speed port data receiving signal | RX6+ | **AU17** | **BU17** | TX6+ | High-speed port data sending signal |
| High-speed port data receiving signal | RX6- | **AU18** | **BU18** | TX6- | High-speed port data sending signal |
| Ground | GND | **AU19** | **BU19** | GND | Ground |
| Low-speed management control signal | P1_SB_7B | **AU20** | **BU20** | P1_SB_0B | Low-speed management control signal |
| Low-speed management control signal | P1_SB_4B | **AU21** | **BU21** | P1_SB_1B | Low-speed management control signal |
| Ground | GND | **AU22** | **BU22** | GND | Ground |
| High-speed port data receiving signal | RX8+ | **AU23** | **BU23** | TX8+ | High-speed port data sending signal |
| High-speed port data receiving signal | RX8- | **AU24** | **BU24** | TX8- | High-speed port data sending signal |
| Ground | GND | **AU25** | **BU25** | GND | Ground |
| High-speed port data receiving signal | RX10+ | **AU26** | **BU26** | TX10+ | High-speed port data sending signal |
| High-speed port data receiving signal | RX10- | **AU27** | **BU27** | TX10- | High-speed port data sending signal |
| Ground | GND | **AU28** | **BU28** | GND | Ground |
| Low-speed management control signal | P1_SB_B+ | **AU29** | **BU29** | P1_SB_5B | Low-speed management control signal |
| Low-speed management control signal | P1_SB_B- | **AU30** | **BU30** | P1_SB_6B | Low-speed management control signal |
| Ground | GND | **AU31** | **BU31** | GND | Ground |
| High-speed port data receiving signal | RX12+ | **AU32** | **BU32** | TX12+ | High-speed port data sending signal |
| High-speed port data receiving signal | RX12- | **AU33** | **BU33** | TX12- | High-speed port data sending signal |
| Ground | GND | **AU34** | **BU34** | GND | Ground |
| High-speed port data receiving signal | RX14+ | **AU35** | **BU35** | TX14+ | High-speed port data sending signal |
| High-speed port data receiving signal | RX14- | **AU36** | **BU36** | TX14- | High-speed port data sending signal |
| Ground | GND | **AU37** | **BU37** | GND | Ground |
| Power signal | V_VCC_3V3 | **AU38** | **BU38** | GND | Ground |
| Power signal | V_VCC_3V3 | **AU39** | **BU39** | Power signal | Power signal |
| Ground | GND | **AU40** | **BU40** | P0_SB_2A | Low-speed management control signal |
| Ground | GND | **AU41** | **BU41** | GND | Ground |
| Ground | GND | **AU42** | **BU42** | GND | Ground |
| Low-speed management control signal | P0_DD_RSVD0 | **AU43** | **BU43** | P0_SB_3B | Low-speed management control signal |
| Power signal | V_VCC_12V | **AU44** | **BU44** | V_VCC_12V | Power signal |
| Power signal | V_VCC_12V | **AU45** | **BU45** | V_VCC_12V | Power signal |
| Power signal | V_VCC_12V | **AU46** | **BU46** | V_VCC_12V | Power signal |
| Ground | GND | **AD 1** | **BD1** | GND | Ground |
| Low-speed management control signal | P0_SB_7A | **AD2** | **BD2** | P0_SB_0A | Low-speed management control signal |
| Low-speed management control signal | P0_SB_4A | **AD3** | **BD3** | P0_SB_1A | Low-speed management control signal |
| Ground | GND | **AD4** | **BD4** | GND | Ground |
| High-speed port data receiving signal | RX1+ | **AD5** | **BD5** | TX1+ | High-speed port data sending signal |
| High-speed port data receiving signal | RX1- | **AD6** | **BD6** | TX1- | High-speed port data sending signal |
| Ground | GND | **AD7** | **BD7** | GND | Ground |
| High-speed port data receiving signal | RX3+ | **AD8** | **BD8** | TX3+ | High-speed port data sending signal |
| High-speed port data receiving signal | RX3- | **AD9** | **BD9** | TX3- | High-speed port data sending signal |
| Ground | GND | **AD10** | **BD10** | GND | Ground |
| Low-speed management control signal | P0_SB_A+ | **AD11** | **BD11** | P0_SB_5A | Low-speed management control signal |
| Low-speed management control signal | P0_SB_A- | **AD12** | **BD12** | P0_SB_6A | Low-speed management control signal |
| Ground | GND | **AD 13** | **BD13** | GND | Ground |
| High-speed port data receiving signal | RX5+ | **AD14** | **BD14** | TX5+ | High-speed port data sending signal |
| High-speed port data receiving signal | RX5- | **AD15** | **BD15** | TX5- | High-speed port data sending signal |
| Ground | GND | **AD16** | **BD16** | GND | Ground |
| High-speed port data receiving signal | RX7+ | **AD17** | **BD17** | TX7+ | High-speed port data sending signal |
| High-speed port data receiving signal | RX7- | **AD18** | **BD18** | TX7- | High-speed port data sending signal |
| Ground | GND | **AD19** | **BD19** | GND | Ground |
| Low-speed management control signal | P1_SB_7A | **AD20** | **BD20** | P1_SB_0A | Low-speed management control signal |
| Low-speed management control signal | P1_SB_4A | **AD21** | **BD21** | P1_SB_1A | Low-speed management control signal |
| Ground | GND | **AD22** | **BD22** | GND | Ground |
| High-speed port data receiving signal | RX9+ | **AD23** | **BD23** | TX9+ | High-speed port data sending signal |
| High-speed port data receiving signal | RX9- | **AD24** | **BD24** | TX9- | High-speed port data sending signal |
| Ground | GND | **AD25** | **BD25** | GND | Ground |
| High-speed port data receiving signal | RX11+ | **AD26** | **BD26** | TX11+ | High-speed port data sending signal |
| High-speed port data receiving signal | RX11- | **AD27** | **BD27** | TX11- | High-speed port data sending signal |
| Ground | GND | **AD28** | **BD28** | GND | Ground |
| Low-speed management control signal | P1_SB_A+ | **AD29** | **BD29** | P1_SB_5A | Low-speed management control signal |
| Low-speed management control signal | P1_SB_A- | **AD30** | **BD30** | P1_SB_6A | Low-speed management control signal |
| Ground | GND | **AD31** | **BD31** | GND | Ground |
| High-speed port data receiving signal | RX13+ | **AD32** | **BD32** | TX13+ | High-speed port data sending signal |
| High-speed port data receiving signal | RX13- | **AD33** | **BD33** | TX13- | High-speed port data sending signal |
| Ground | GND | **AD34** | **BD34** | GND | Ground |
| High-speed port data receiving signal | RX15+ | **AD35** | **BD35** | TX15+ | High-speed port data sending signal |
| High-speed port data receiving signal | RX15- | **AD36** | **BD36** | TX15- | High-speed port data sending signal |
| Ground | GND | **AD37** | **BD37** | GND | Ground |
| Power signal | V_VCC_3V3 | **AD38** | **BD38** | P1_SB_2B | Low-speed management control signal |
| | | | | P0_SB_2B | |
| Power signal | V_VCC_3V3 | **AD39** | **BD39** | V_VCC_3V3 | Power signal |
| Ground | GND | **AD40** | **BD40** | P1_SB_2A | Low-speed management control signal |
| Ground | GND | **AD41** | **BD41** | GND | Ground |
| Ground | GND | **AD42** | **BD42** | GND | Ground |
| Low-speed management control signal | P1_DD_RSVD0 | **AD43** | **BD43** | P1_SB_3B | Low-speed management control signal |
| Power signal | V_VCC_12V | **AD44** | **BD44** | V_VCC_12V | Power signal |
| Power signal | V_VCC_12V | **AD45** | **BD45** | V_VCC_12V | Power signal |
| Power signal | V_VCC_12V | **AD46** | **BD46** | V_VCC_12V | Power signal |

For a multiplexing relationship of the low-speed management control signal (the sideband signal), refer to a definition of the multiplexing relationship in the 74-pin high-speed connector. Details are not described herein.

Based on the foregoing method and the basic computing unit 100 that are provided in embodiments of this application, an embodiment of this application further provides a mainboard 10. Refer to the diagram of the structure of the mainboard 10 shown in FIG. 1 or FIG. 2. The mainboard 10 includes a basic computing unit 100 and a high-speed unit 200. The mainboard 10 further includes an extension unit (not shown in the figure).

The high-speed unit 200 is connected to the basic computing unit 100, and the basic computing unit 100 and the high-speed unit 200 collaboratively perform the method in the embodiment shown in FIG. 3, to adapt a port mode of a port of a processor 102 in the basic computing unit 100 to the high-speed unit 200.

Further, an embodiment of this application further provides a computing device. In some embodiments, the computing device may be a server, for example, a rack server. In some other embodiments, the computing device may alternatively be a terminal.

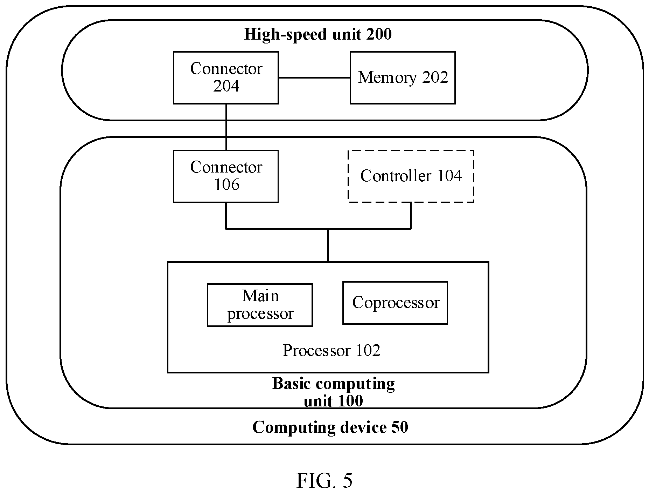

FIG. 5 is a diagram of a structure of a computing device. As shown in FIG. 5, the computing device 50 includes a basic computing unit 100 and a high-speed unit 200. In some embodiments, the basic computing unit 100 includes a processor 102, a controller 104, and a connector 106. In some other embodiments, a main processor and a coprocessor may be packaged in the processor 102. In this case, a function of the controller 104 may be implemented by the coprocessor, or the basic computing unit 100 may not include the controller 104. The high-speed unit 200 includes a memory 202 and a connector 204. The high-speed unit 200 is connected to the basic computing unit 100.

The processor 102 may include any one or more of processors such as a central processing unit CPU, a graphics processing unit (graphics processing unit, GPU), a microprocessor (microprocessor, MP), or a digital signal processor (digital signal processor, DSP). In some embodiments, the processor 102 may further include the coprocessor.

The controller 104 may be one or more of a micro control unit MCU, a field programmable gate array FPGA, or a complex programmable logic device CPLD.

The connector 106 may be a high-speed connector, for example, a UBC or a UBC-DD. In some embodiments, the connector 106 may alternatively be a common connector (for example, a low-speed connector). Similarly, the connector 204 of the high-speed unit 200 may be a high-speed connector, or a common connector (for example, a low-speed connector). The connector 204 of the high-speed unit 200 is connected to the connector 106 of the basic computing unit 100, so that the high-speed unit 200 is connected to the basic computing unit 100.

The basic computing unit 100 identifies connection of the high-speed unit 200, obtains, through a transmission interface provided by the connector 106, a unit requirement transmitted by the high-speed unit 200, and adapts, based on the unit requirement, a port mode of a port connected to the connector 106 to the high-speed unit 200.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the foregoing connector-based port management method.

An embodiment of this application further provides a computer program product. The computer program product includes one or more computer instructions. When the computer instructions are loaded and executed on a computing device, the procedures or functions according to embodiments of this application are all or partially generated. The computer instructions may be stored in a computer-readable storage medium or may be transmitted from a computer-readable storage medium to another computer-readable storage medium. For example, the computer instructions may be transmitted from a website, computing device, or data center to another website, computing device, or data center in a wired (for example, a coaxial cable, an optical fiber, or a digital subscriber line (DSL)) or wireless (for example, infrared, radio, or microwave) manner. The computer program product may be a software installation package. When any one of the foregoing connector-based port management methods needs to be used, the computer program product may be downloaded and the computer program product may be executed on the computing device.

Descriptions of procedures or structures corresponding to the foregoing accompanying drawings have respective focuses. For a part that is not described in detail in a specific procedure or structure, refer to related descriptions of other procedures or structures.

## Claims

1. A connector-based port management method, wherein the method comprises:
identifying connection of a unit;
obtaining a unit requirement through a transmission interface provided by a connector, wherein the unit requirement indicates an attribute of a port required by the unit; and
adapting a port mode of the port connected to the connector to the unit based on the unit requirement.

2. The method according to claim 1, wherein before the obtaining a unit requirement through a transmission interface provided by a connector, the method further comprises:
obtaining a unit type of the unit; and
configuring, based on the unit type, a sideband signal corresponding to the unit, wherein the sideband signal comprises the transmission interface.

3. The method according to claim 1 or 2, wherein the attribute of the port required by the unit comprises one or more of a port type, a link bit width, a maximum port rate, a lane sequence reversal capability, a signal polarity reversal capability, and a hot swap capability.

4. The method according to claim 2, wherein the obtaining a unit type of the unit comprises:
sampling a first pin of the connector to obtain the unit type of the unit.

5. The method according to claim 4, wherein the unit type is identified by a high or low level of the first pin.

6. The method according to any one of claims 1 to 5, wherein the obtaining a unit requirement through a transmission interface provided by a connector comprises:
sampling a second pin of the connector to obtain the unit requirement transmitted by the unit through the transmission interface.

7. The method according to any one of claims 1 to 6, wherein the obtaining a unit requirement through a transmission interface provided by a connector comprises:
receiving, through the transmission interface provided by the connector, the unit requirement reported by the unit.

8. The method according to any one of claims 1 to 6, wherein the obtaining a unit requirement through a transmission interface provided by a connector comprises:
sending a request to the unit; and
receiving, through the transmission interface provided by the connector, the unit requirement returned by the unit in response to the request.

9. The method according to any one of claims 1 to 6, wherein the transmission interface is a single-wire transmission interface.

10. The method according to any one of claims 1 to 7, wherein the unit type is generated by a unit type identifier implementation circuit in the unit.

11. The method according to any one of claims 1 to 10, wherein the method is performed by a basic computing unit.

12. The method according to any one of claims 1 to 10, wherein the unit comprises one or more of a storage unit, an input/output I/O unit, an acceleration unit, and a memory expansion unit.

13. A basic computing unit, wherein the basic computing unit comprises a processor and a connector, the processor has a port, and the basic computing unit is configured to perform the method according to any one of claims 1 to 12, to manage the port of the processor based on the connector.

14. The basic computing unit according to claim 13, wherein the processor is a central processing unit, and a main processor and a coprocessor are packaged in the central processing unit, wherein the coprocessor is configured to: obtain a unit requirement through a transmission interface provided by the connector, wherein the unit requirement indicates an attribute of a port required by a unit; and transfer the unit requirement to the main processor; and the main processor is configured to adapt, based on the unit requirement, a port mode of the port connected to the connector to the unit.

15. The basic computing unit according to claim 13, wherein the basic computing unit further comprises a controller, and the controller is configured to: obtain a unit requirement through a transmission interface provided by the connector, wherein the unit requirement indicates an attribute of a port required by a unit; and transfer the unit requirement to the processor; and the processor is configured to adapt a port mode of the port connected to the connector to the unit.

16. The basic computing unit according to claim 15, wherein the controller comprises one or more of a micro control unit MCU, a complex programmable logic device CPLD, and a field programmable gate array FPGA.

17. A mainboard, wherein the mainboard comprises a basic computing unit and a unit, and when the unit is connected to the basic computing unit, the basic computing unit is configured to perform the method according to any one of claims 1 to 12, to manage a port of a processor on the basic computing unit based on a connector.

18. A computing device, wherein the computing device comprises a basic computing unit, and the basic computing unit is configured to perform the method according to any one of claims 1 to 12, to manage a port of a processor on the basic computing unit based on a connector.
